# DEMANDE DE BREVET EUROPEEN

(11) **EP 4 310 639 A1**
(43) Date de publication de la demande: **24.01.2024**
(21) Numéro de dépôt: 23186793.8
(22) Date de dépôt: 20.07.2023
(51) Int. Cl.: G06F 3/01

(54) **PROCÉDÉ D ADAPTATION D'INTERFACE HOMME MACHINE**

(30) Priorité: 22.07.2022 FR 2207575
(71) Demandeur: Orange, 92130 Issy-les-Moulineaux (FR)
(72) Inventeur: FLOURY, Cédric, 92326 CHÂTILLON CEDEX (FR); MERCIER, Violaine, 22560 PLEUMEUN-BODOU (FR); LETELLIER, Jean François, 92326 CHATILLON CEDEX (FR)
(74) Mandataire: Plasseraud IP

(57) **Abrégé**

L'invention concerne un procédé mis en oeuvre par un dispositif informatique le procédé comprenant une limitation du rendu d'au moins une notification sur au moins une interface homme machine dudit dispositif lors d'une consommation d'un contenu dans un environnement dudit dispositif.

## Description

### Domaine technique

La présente divulgation relève du domaine des interfaces homme machine.

### Technique antérieure

De nombreux dispositifs informatiques disposent d'interfaces homme machines. Une Interface Homme Machine (IHM) permet d'interagir avec l'environnement du dispositif informatique, en envoyant des informations en sortie de l'interface homme machine, par exemple par le biais d'écrans, haut-parleurs, etc. et/ou en en recevant des informations en entrée, par exemple par le biais de clavier, caméras, ou encore microphones.

Les dispositifs informatiques disposant d'interfaces homme machine sont massivement utilisés et peuvent par exemple être des smartphones, montres connectées (ou « smartwatches »), tablettes, ordinateurs personnels, des serveurs, des ordinateurs de bord de véhicules, des lunettes connectées, ou de manière générale tout dispositif informatique disposant d'une interface homme machine. L'interface homme machine peut être intégrée au dispositif lui-même, et/ou être constituée de dispositifs déportés connectés au dispositif informatique.

Il existe des besoins d'amélioration des interfaces homme machine de tels dispositifs, pour mieux les adapter au besoin des utilisateurs de ces dispositifs.

### Résumé

La présente divulgation vient améliorer la situation.

Il est proposé un procédé mis en oeuvre par un dispositif informatique le procédé comprenant : une limitation du rendu d'au moins une notification sur au moins une interface homme machine dudit dispositif lors d'une consommation d'un contenu dans un environnement dudit dispositif.

On entend par au moins une interface homme machine dudit dispositif au moins une interface homme machine couplée au dispositif, c'est-à-dire une interface homme machine intégrée au dispositif, ou une interface homme machine reliée au dispositif par des moyens de communications avec ou sans fil.

Une interface homme machine intégrée au dispositif peut par exemple être :
- un écran tactile intégré à une tablette ;
- un haut-parleur intégré au dispositif ;
- une webcam intégrée au dispositif ;
- un microphone intégré au dispositif ;
- des dispositifs d'affichage en superposition intégrés à des lunettes intelligentes;
- un moteur à vibrations intégré au dispositif ;
- un capteur de présence intégré au dispositif ;
- etc.

Une interface homme machine reliée au dispositif peut par exemple être :
- un clavier relié au dispositif avec ou sans fil ;
- une souris reliée au dispositif avec ou sans fil ;
- un écran relié au dispositif avec ou sans fil ;
- un vidéoprojecteur relié au dispositif avec ou sans fil ;
- un capteur de mouvement, de position ou de présence dans un second dispositif tel qu'un téléphone intelligent (smartphone) ou une montre connectée au dispositif informatique ;
- plus généralement tout capteur qui n'est pas situé dans le dispositif et dont les mesures sont transmises au dispositif informatique par une connexion filaire ou non filaire.

Ces interfaces homme machine sont fournies à titre d'exemple non limitatif uniquement, et l'invention est plus généralement applicable à tout type d'interface homme machine couplée au dispositif informatique.

On entend par « consommation d'un contenu dans un environnement dudit dispositif » une lecture ou une écriture d'un contenu dans un environnement du dispositif. Une lecture peut par exemple être une audition dans le cas d'un contenu audio, ou encore une lecture d'un texte dans le cas d'un contenu de type courriel, ou encore la lecture d'un contenu externe tel qu'un texte écrit sur support papier ou un contenu vidéo rendu par et/ou à proximité de l'interface homme machine ou autre.

On entend par écriture une modification du contenu, telle que l'écriture d'un mail ou d'un fichier texte, l'enregistrement d'un fichier audio, ou la modification d'un contenu externe telle qu'une feuille de papier, par exemple par l'écriture ou le dessin sur la feuille.

L'environnement du dispositif peut être le dispositif lui-même, si le contenu est localisé dans le dispositif, ce qui est par exemple le cas d'un fichier stocké sur le dispositif. Il peut également s'agir d'un environnement réseau, par exemple dans le cas d'un fichier stocké dans un réseau local et lu par le dispositif, ou d'un contenu lu via un service de diffusion en continue (ou « streaming » selon la terminologie anglaise).. L'environnement du dispositif peut enfin être un environnement physique du dispositif, par exemple dans le cas d'un contenu sur un support physique externe au dispositif, lu via un dispositif tel que des lunettes.

Les interfaces homme machine peuvent être configurées pour émettre des notifications lors de la survenue de certains événements, notamment des événements susceptibles d'intéresser un utilisateur du dispositif informatique. On entend dans la présente demande par notification, une activation d'au moins une interface homme machine de sortie d'un dispositif, susceptible de « notifier » (ie avertir, informer) un utilisateur de la survenue d'un événement. Par exemple, une notification peut être émise en cas de réception d'un mail, d'un message SMS ou de messagerie instantanée, de la réception d'un avis sur l'utilisateur dans une application, de l'apparition d'une nouvelle occurrence d'un objet correspondant à une recherche de l'utilisateur.

De manière générale, de nombreux logiciels ou applications installés sur le dispositif peuvent émettre des notifications, en fonction de l'intérêt de celles-ci pour l'utilisateur du dispositif. Les notifications peuvent utiliser toutes les options d'émission d'information en sortie de l'interface homme machine, et peuvent par exemple prendre la forme d'une bulle apparaissant sur l'écran, contenant ou non du texte, d'un son, d'une vidéo, ou d'une combinaison de ces éléments. Une notification relative à un message ou mail se présente typiquement sous la forme d'une bulle apparaissant avec un extrait du message, et le cas échéant le titre du mail, éventuellement accompagnée d'un son.

Si les notifications permettent à l'utilisateur d'être instantanément informé d'événements susceptibles de l'intéresser, l'émission d'une notification peut dans certains cas déranger, ou de manière plus générale déconcentrer l'utilisateur lors de l'utilisation d'un contenu. Par exemple, lorsque l'utilisateur est concentré sur la lecture d'un texte ou mail complexe, l'émission d'une notification en pleine lecture peut le déconcentrer. La multiplication des applications émettant des notifications rend l'émission de notifications, et donc les occasions de déconcentration de l'utilisateur par des notifications, plus fréquentes.

On entend par limitation (ou réduction) de l'au moins une notification, une action visant à rendre cette notification moins perceptible pour un utilisateur notamment. Cette réduction peut varier selon les modes de réalisation.

Un exemple de de limitation peut être un blocage de la notification, réalisé par exemple avant que celle-ci ne soit émise via l'au moins une interface homme machine (de façon à ne pas activer l'interface homme machine, par exemple à n'émettre aucun son sur aucun haut-parleur du dispositif et à n'afficher aucune information en lien avec cette notification sur aucun écran couplé au dispositif).

Dans certains modes de réalisation, une limitation peut comprendre une altération (par exemple une réduction de l'intensité) d'au moins une des composantes audio, image ou vidéo, de la notification (par rapport à une première configuration en l'absence de consommation de contenu du rendu de la notification) . Ceci peut par exemple permettre de conserver une action de notification, mais en diminuer la perception par l'utilisateur. Par exemple, dans certains modes de réalisation, la limitation peut comprendre altérer un rendu de la notification pour émettre d'un son avec une intensité sonore plus faible, afficher de bulles plus petites, avec un texte plus succinct, et/ou plus transparentes, réduire le temps d'affichage ou d'émission de la notification ; et/ou une suppression d'au moins certaines actions sur l'au moins une interface homme machine associées à la notification. Cette altération peut par exemple être effectuée avant tout rendu de la notification, de façon par exemple à utiliser des paramètres de rendu différents de paramètres de rendu défini par défaut pour les notifications de l'application dont la notification (à altérer) est issue. Cette altération peut correspondre par exemple à une suppression d'au moins une activation d'au moins une sortie de l' au moins une interface homme machine normalement associée à la notification. Par exemple, une notification consistant par défaut en l'affichage d'une bulle et l'émission d'un son pourra, lors de la limitation, ne consister qu'en l'affichage de la bulle, sans émission de son)

Une autre façon de rendre une notification moins perceptible peut être, dans certains modes de réalisation, de modifier la durée de la notification, ou de la rendre de façon différée. La notification peut être différée de différentes manières. Par exemple, elle peut être différée d'une durée constante ou variable (par exemple prédéfinie), ou différée à la fin de la consommation du contenu. En cas de consommation de plusieurs contenus successifs, la notification peut être rendue, da façon différée, soit à l'issue de la consommation du contenu en cours lors de la survenue de la notification, soit à l'issue de la consommation des contenus successifs.

Les différents types de limitations peuvent être combinés. Par exemple, une notification peut être à la fois différée, et altérée. Ainsi, la notification différée peut être identique à la notification initiale, ou altérée.

Ces exemples sont fournis de façon non limitative et toute action permettant de réduire et/ou différer l'impact d'une notification pour un utilisateur peut être utilisée dans le cadre de cette invention.

La limitation d'au moins une notification pendant la consommation du contenu permet à l'utilisateur de rester concentré sur son contenu durant la consommation de celui-ci, sans être déconcentré par la notification. Par exemple, dans mode de réalisation de l'invention, lors de la lecture d'un mail, l'utilisateur ne sera pas dérangé par des notifications survenant sous la forme de bulles ou de sons. La limitation selon l'invention ne requiert pas d'intervention manuelle de l'utilisateur, et permet donc à celui-ci de rester concentré sur le contenu consommé sans avoir à configurer manuellement son interface, au contraire de certaines solutions de l'état de l'art qui ne permettent à l'utilisateur que de modifier manuellement (et à l'avance) les paramètres d'émission de notifications. Cependant, la gestion manuelle des notifications ne permet en pratique pas à l'utilisateur d'activer/désactiver les notifications de manière fine. En particulier, l'utilisateur pourra difficilement faire la démarche de désactiver automatiquement les notifications dès qu'il commence à utiliser un contenu sur lequel il souhaite être concentré, et réactiver automatiquement les notifications dès qu'il a terminé l'utilisation du contenu pour bénéficier des notifications et alertes qu'il utilise habituellement.

Le procédé selon l'invention permet donc, contrairement aux solutions de l'état de l'art, à l'utilisateur de rester concentré lors de la consommation du contenu, et de bénéficier des notifications le reste du temps, sans besoin d'interventions manuelles complexes à mettre en oeuvre.

Selon un autre aspect, il est proposé un programme informatique comportant des instructions pour la mise en oeuvre de tout ou partie d'un procédé tel que défini dans les présentes lorsque ce programme est exécuté par un processeur.

Selon un autre aspect, il est proposé un support d'enregistrement non transitoire, lisible par un ordinateur, sur lequel est enregistré un tel programme.

Selon un autre aspect, il est proposé un dispositif informatique comprenant au moins un processeur configuré pour exécuter tout ou partie d'un procédé tel que défini dans la présente demande.

Les caractéristiques exposées dans la présente demande peuvent, optionnellement, être mises en oeuvre, indépendamment les unes des autres ou en combinaison les unes avec les autres :

Ainsi, dans certains modes de réalisation, le procédé comprend une détection d'un début de ladite consommation sur une détection d'un accès audit contenu.

Dans certains modes de réalisation, ladite limitation comprend un différé du rendu de l'au moins une notification.

Le différé du rendu de l'au moins une notification peut comprendre le rendu de l'au moins une notification à un instant ultérieur à la survenue de l'évènement objet de la notification (par exemple à un instant ultérieur à l'instant de génération ou d'émission de la notification), plutôt qu'à l'instant à laquelle la notification est générée ou émise.

Ainsi, la notification est rendue ultérieurement, permettant à l'utilisateur de rester concentré à l'instant courant.

L'instant ultérieur peut être déterminé de différentes manières. Par exemple, le rendu de la notification peut être différé d'une durée constante ou variable (par exemple prédéfinie), ou d'une durée correspondant à une durée de consommation estimée du contenu par rapport à l'instant de la survenue de l'évènement objet de la notification, et/ou à l'instant de génération ou d'émission de la notification.

Le rendu de la notification peut également être effectué lors de la survenue d'un événement ultérieur en lien avec la consommation du contenu. Par exemple, le rendu de la notification peut survenir à la détection de la fin de la consommation du contenu (par exemple, à la détection de la fermeture du contenu, ou à la détection de la fin d'une consommation active par l'utilisateur (par exemple, à la détection de l'arrêt du scroll ou de l'arrêt de mouvements oculaires). Ainsi, la notification est automatiquement rendue lorsque l'utilisateur a terminé la consommation active et ne risque plus d'être dérangé.

La notification différée peut être identique à la notification initiale, ou altérée afin de limiter l'impact du rendu de la notification à l'utilisateur, par exemple selon l'un des exemples d'altérations discutés dans la présente demande.

Dans certains modes de réalisation, le procédé comprend, une caractérisation du contenu, et ladite limitation est conditionnée à ladite caractérisation.

Dans certains modes de réalisation, la caractérisation du contenu correspond à la définition d'une ou plusieurs caractéristiques du contenu.

Dans certains modes de réalisation, ladite limitation est mise en oeuvre pendant une durée tenant compte dudit contenu consommé.

Dans certains modes de réalisation, ladite durée de ladite limitation est au moins fonction d'une taille dudit contenu.

Dans certains modes de réalisation, lorsque le contenu comprend des données de texte, ladite durée de ladite limitation est au moins fonction d'une longueur desdites données de texte.

Dans certains modes de réalisation, ladite durée de ladite limitation est au moins fonction d'une vitesse de consommation dudit contenu.

Dans certains modes de réalisation, lorsque le contenu comprend des données de texte, ladite durée de ladite limitation est au moins fonction d'une vitesse estimée de lecture du texte.

Dans certains modes de réalisation, le procédé comprend une détection d'un début de ladite consommation et/ou une surveillance de ladite consommation via une analyse de mesures issues d'au moins un capteur d'activité d'un consommateur dudit contenu.

Dans certains modes de réalisation, les mesures comportent un suivi oculaire dudit consommateur.

Dans certains modes de réalisation, l'analyse de mesures de suivi oculaire est au moins fonction de ladite caractérisation du contenu.

Dans certains modes de réalisation, le contenu est rendu sur un support physique distinct de l'au moins une interface homme machine.

Dans certains modes de réalisation, la consommation du contenu comporte au moins un élément parmi une lecture et une écriture d'un contenu sous forme de texte.

### Brève description des dessins

D'autres caractéristiques, détails et avantages apparaîtront à la lecture de la description détaillée ci-après, et à l'analyse des dessins annexés, sur lesquels :
**Fig. 1a**

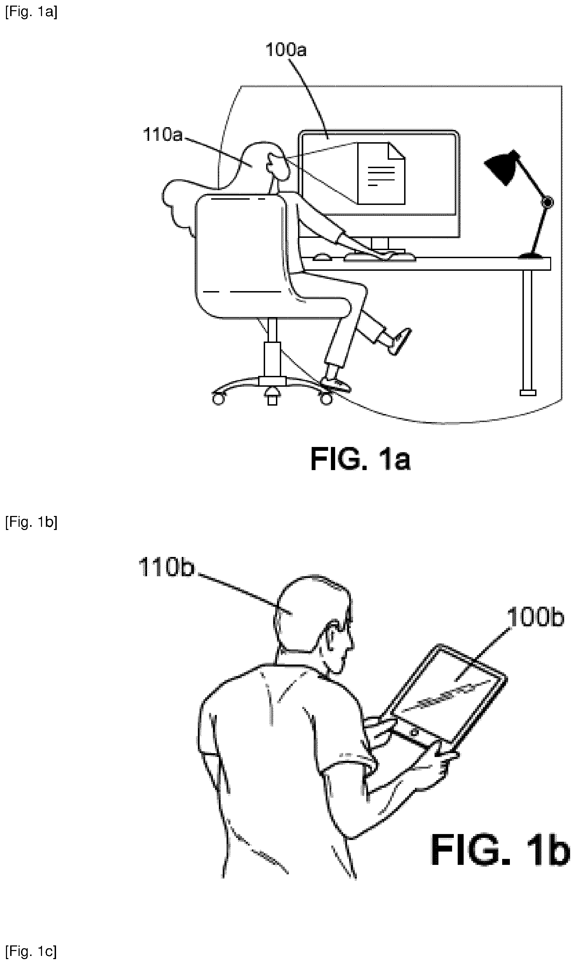

   [Fig. 1a] montre un exemple de dispositif informatique selon certains modes de réalisation.
**Fig. 1b**
   [Fig. 1b] montre un exemple de dispositif informatique selon un certains modes de réalisation.
**Fig. 1c**

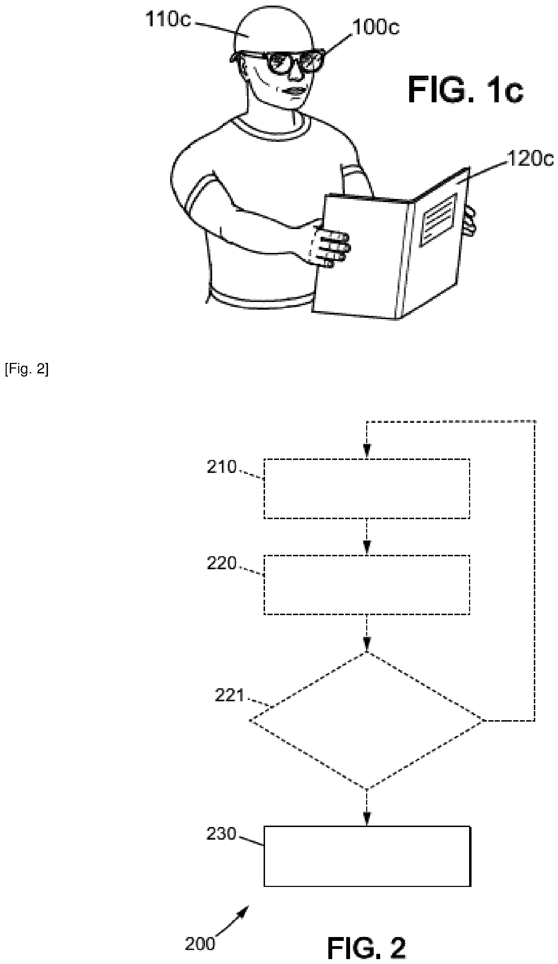

   [Fig. 1c] montre un exemple de dispositif informatique selon certains modes de réalisation.
**Fig. 2**
   [Fig. 2] montre un premier exemple de procédé selon certains modes de réalisation.
**Fig. 3**

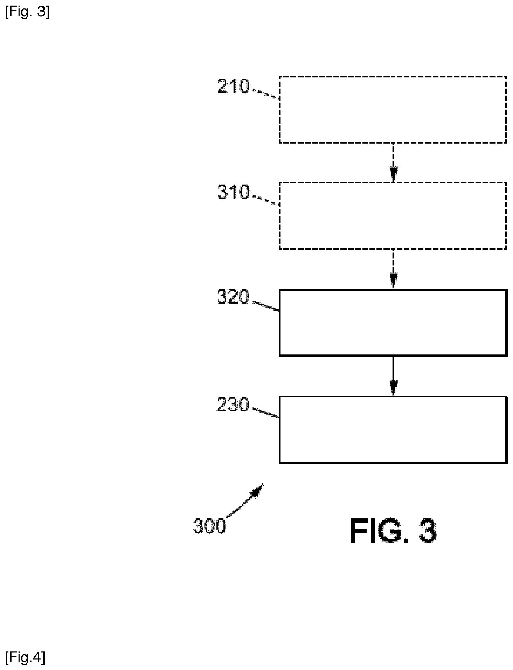

   [Fig. 3] montre un deuxième exemple de procédé selon certains modes de réalisation.
**Fig. 4**

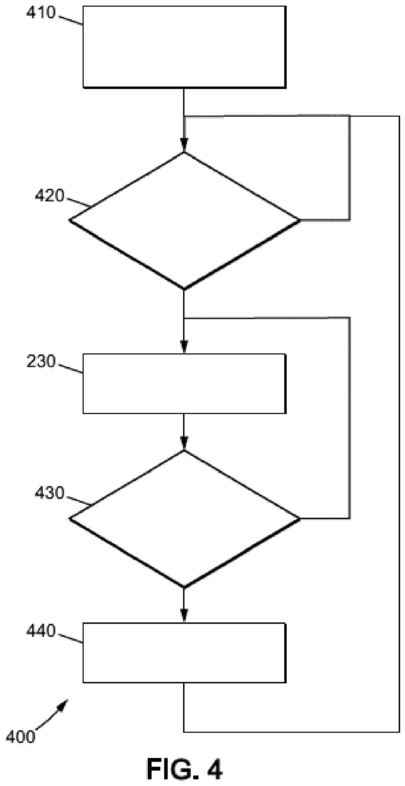

   [Fig. 4] montre un troisième exemple de procédé selon certains modes de réalisation.

### Description des modes de réalisation

Il est maintenant fait référence à la figure 1a.

La figure 1a représente un exemple de dispositif informatique selon certains modes de réalisation de l'invention.

Dans l'exemple illustré, le dispositif informatique est un ordinateur personnel 100a.

L'ordinateur personnel 100a permet à un utilisateur 110a de consommer des contenus et d'interagir via au moins une Interface Homme Machine (IHM).

Dans l'exemple de la figure 1a, les contenus pouvant être consommés par l'utilisateur 110a peuvent être par exemple :
- Des contenus textuels (comme des mails, documents Word ou pdf, e-books...) ;
- Des contenus audio / vidéo (comme des services de streaming audio / vidéo, des vidéos à la demande, des vidéos ou musique stockées sur l'ordinateur...) ;
- Ou plus généralement tout contenu électronique consommable par un utilisateur d'un ordinateur personnel.

L'au moins une interface homme machine peut comprendre au moins une interface homme machine d'entrée (permettant au dispositif d'acquérir des informations d'un utilisateur du dispositif) et/ou au moins une interface homme machine de sortie (permettant au dispositif de « rendre » (ou restituer) des informations à un utilisateur du dispositif), tels qu'un clavier, une souris, un écran, une webcam, un dispositif de suivi oculaire (oculométrie), des haut-parleurs, un microphone, des capteurs.

Ces interfaces homme machine peuvent notamment être utilisées par un utilisateur du dispositif informatique pour consommer le contenu, et fournir des instructions au dispositif informatique. Dans certains modes de réalisation de l'invention, elles permettent également de détecter le début de la consommation, et suivre la consommation, par exemple par le biais d'un suivi oculaire ou d'un détecteur de présence.

La consommation du contenu peut aussi bien consister en une lecture du contenu, par exemple la lecture d'un fichier texte ou le visionnage d'une vidéo, qu'en une écriture du contenu, par exemple l'édition d'un fichier texte, une retouche d'image ou un montage de vidéo.

Les interfaces homme machine permettent également de rendre à l'utilisateur 110a des notifications. Ces notifications permettent à l'utilisateur d'être informé d'événements tels que l'arrivée d"un message électronique ou l'apparition de nouveaux résultats de recherche. Elles peuvent par exemple prendre la forme de bulles de texte apparaissant sur un écran, de sons, de vibration, ou plus généralement de toute information sensorielle pouvant être générée par une interface homme machine et permettant à l'utilisateur de prendre connaissance de la survenue d'un événement.

Au moins une application exécutée par l'ordinateur personnel 100a peut par exemple être configurée pour émettre des notifications pouvant utiliser au moins une des interfaces homme machine accessibles via l'ordinateur personnel 100a.

Il est maintenant fait référence à la figure 1b.

La figure 1b représente un second exemple de dispositif informatique selon certains modes de réalisation de l'invention où le dispositif informatique est une tablette tactile 100b.

La tablette tactile 100b permet par exemple à un utilisateur 110b de consommer des contenus et d'interagir via au moins une Interface Homme Machine (IHM).

Comme l'ordinateur personnel 100a, la tablette 100b peut permettre à l'utilisateur 110b de consommer de nombreux types de contenus électroniques, tels que des contenus textuels, audio, image ou vidéo.

L'au moins une interface homme machine peut comprendre des interfaces homme machine d'entrée et de sortie, tels qu'un clavier, un écran tactile, des boutons tactiles des capteurs de mouvement, une webcam, un dispositif de suivi oculaire, des haut-parleurs, un microphone. Des exemples d'interfaces homme machine peuvent également intégrer des dispositifs connectés à la tablette 100b, par exemple une montre ou des lunettes connectées équipées de capteurs.

Il est maintenant fait référence à la figure 1c.

La figure 1c représente un troisième exemple de dispositif informatique selon certains modes de réalisation de l'invention.

Le dispositif informatique est une paire de lunettes intelligentes 100c.

La paire de lunettes 100c peut permettre par exemple à un utilisateur 110c de consommer un contenu sur un support physique 120c distinct de l'au moins une interface homme machine (ie n'appartenant pas aux interfaces homme machine du dispositif, et n'étant pas couplé ni connecté au dispositif ou à l'IHM, avec ou sans fil) . La paire de lunette 100c peut permettre de consommer différents types (par exemple tout type) de contenu pouvant être consommé par la vue, tels que par exemple :
- Un texte écrit ou en cours d'écriture sur support non électronique (par exemple papier (livre, journal...), cartonné etc.). ;

Une image affichée, ou vidéo diffusée dans l'espace public ou dans un espace de projection privé, par exemple une publicité ou un film projeté via un vidéoprojecteur ou un écran de télévision. Le support physique peut ainsi être un support électronique, comme par exemple un écran électronique, ou un support non électronique, comme par exemple une feuille de papier. La consommation du contenu peut aussi bien consister en une lecture du contenu, par exemple la lecture d'un journal ou le visionnage d'une vidéo, qu'en une écriture du contenu, par exemple l'écriture manuscrite d'un texte sur une feuille de papier.

La paire de lunettes intelligentes 100c peut comprendre par ailleurs, au moins dans certains modes de réalisation, des capacités de calcul lui permettant d'exécuter des applications, et des capacités de connexion permettant d'interagir avec d'autres dispositifs informatiques tels qu'un terminal de communication(comme un téléphone intelligent) ou une montre connectée.

Les lunettes intelligentes 100c peuvent également permettre d'envoyer des notifications à l'utilisateur 110c via au moins une interface homme machine pouvant être par exemple :
- un moyen d'affichage de données en superposition dans les lunettes. De tels moyens d'affichage permettent d'afficher des messages ou pictogrammes que l'utilisateur voit au travers des lunettes, en superposition de ce qu'ils regardent. Un tels moyen d'affichage peut par exemple être une projection sur les lunettes, ou des micro-afficheurs OLED disposés sur les lunettes ;
- un haut-parleur permettant d'émettre des sons à proximité des oreilles de l'utilisateur ;
- des dispositifs vibratoires permettant à l'utilisateur de ressentir des vibrations.

L'au moins une interface homme machine peut également comprendre des interfaces homme machine d'entrée, pouvant être par exemple :
- Un dispositif de suivi oculaire intégré aux lunettes ;
- Un clavier ou écran tactile communiquant avec les lunettes ;
- Un capteur de mouvement ou de présence intégré aux lunettes.

Selon les exemples illustrés, chacun des dispositifs informatique 100a, 100b et 100c peut être équipé de capacités de calcul. Les capacités de calcul peuvent être par exemple comprendre des processeurs, apte à exécuter des instructions de code pouvant faire partie de logiciels ou d'applications.

Si l'émission de notifications permet généralement à l'utilisateur de disposer en temps réel de la survenue d'événements susceptibles de l'intéresser, les notifications peuvent déconcentrer l'utilisateur lors de la consommation de contenu.

Afin de permettre à l'utilisateur de bénéficier de manière générale de notifications, sans pour autant être déconcentré lors de la consommation de contenu, les dispositifs 100a, 100b et 100c sont configurés pour mettre en oeuvre le procédé selon l'un des modes de réalisation de l'invention, tels que par exemple décrits en référence aux figures 2, 3 et 4.

Les dispositifs 100a, 100b et 100c sont donnés à titre d'exemple uniquement de dispositifs informatiques aptes à mettre en oeuvre l'invention. L'invention est plus généralement applicable à tout dispositif informatique apte à émettre des notifications via une interface homme machine, que l'au moins une interface homme machine soit interne ou externe au dispositif.

La figure 2 montre un premier exemple de procédé 200 selon certains modes de réalisation de la présente demande.

Le procédé 200 est un procédé mis en oeuvre par un dispositif informatique tel que les dispositifs 100a, 100b, 100c.

La mise en oeuvre du procédé n'est cependant pas limitée aux dispositifs 100a, 100b et 100c, et le procédé peut être mis en oeuvre par tout dispositif informatique apte à émettre des notifications sur au moins une interface homme machine faisant partie ou non du dispositif.

Selon la figure 2, le procédé 200 peut comprendre une étape 230 de limitation du rendu d'au moins une notification sur au moins une interface homme machine dudit dispositif pendant une consommation d'un contenu dans un environnement dudit dispositif.

Les limitations de l'au moins une notification peuvent également être appliquées de manière conjointe sur plusieurs actions, sur l'interface(s) homme machine, représentatives de la notification. Par exemple, une notification émise par défaut sous la forme d'une bulle large avec un texte accompagnée d'un son important pourra, en forme limitée, être émise sous la forme d'une bulle étroite avec un texte limitée (réduction de l'intensité de la bulle), ou encore sans son (diminution des actions par désactivation de la sortie sonore).

Selon les modes de réalisation, l'au moins une notification peut être définitivement limitée (par exemple bloquée), ou au contraire complètement restituée à l'utilisateur (sans limitation) à l'issue de la consommation (ou de la durée de la consommation (par exemple la durée estimée de consommation comme exposée ci-après)). Par exemple, si une notification est bloquée pendant la consommation du contenu, elle peut être soit définitivement bloquée, soit émise dès la fin de la consommation du contenu, c'est-à-dire différée jusqu'à la fin de la consommation (ou de la durée de la consommation (par exemple la durée estimée de consommation comme exposée ci-après)) . De même, si au moins une action associée à la notification a été limitée pendant la consommation (ou la durée, par exemple estimée, de cette consommation), (par exemple supprimée ou d'intensité réduite), elle peut être effectuée de façon différée, avec ou sans limitation à l'issue de la consommation ou au contraire rester limitée, voire ne pas être effectuée du tout, à l'issue de la consommation.

Par exemple, dans certains modes de réalisation, un son d'alerte non émis pendant la consommation peut l'être à l'issue de la période de consommation, c'est-à-dire différé à la fin de la consommation du contenu. Dans un ensemble de modes de réalisation de l'invention, la notification peut être uniquement différée tout en conservant son rendu initial.

Dans certains modes de réalisation, la notification peut au contraire être à la fois différée et altérée. Par exemple, un son d'alerte émis avec une intensité faible pendant la consommation peut être émis avec une intensité forte à l'issue de la consommation. Une notification différée et/ou altérée peut comprendre dans certains modes de réalisation un indication (visuelle et/ou sonore) indiquant à l'utilisateur qu'il s'agit d'une notification différée / altérée.

Dans certains modes de réalisation, où une notification a, par paramétrage, en l'absence de consommation de contenu, une durée (dite initiale) de rendu, la notification différée peut être rendue, selon les modes de réalisation, soit selon sa durée initiale, soit selon une durée réduite par rapport à cette durée initiale. Par exemple, une première durée paramétrable peut être utilisée pour les notifications rendues de manière non différée lorsqu'aucun contenu n'est consommé, et une seconde durée paramétrable, plus courte que la première durée, peut être utilisée pour les notifications rendues de manière différée à la fin de la consommation d'un contenu. Les notifications différées peuvent également être rendues durant une durée égale à une fraction ou un pourcentage de la durée du rendu non différé.

Si plusieurs notifications sont différées pendant la consommation d'un contenu, elles peuvent, dans un ensemble de modes de réalisation de l'invention, être rendues à l'issue de la consommation du contenu, soit indépendamment les unes des autres, soit de manière groupée. Les notifications peuvent être groupées de différentes manières. Par exemple, elles peuvent être groupées par types de notifications, par application, selon différentes caractéristiques liées aux notifications (par exemple, par émetteur de message ou conversation pour des notifications textuelles), etc.

Dans l'exemple illustré en figure 2, l'étape 230 comprend donc, lorsqu'un contenu est consommé dans un environnement du dispositif, une limitation d'au moins une notification sur au moins une interface homme machine du dispositif.

Par exemple, lorsqu'un utilisateur lit un mail, écrit un texte, écoute un podcast ou lit le journal, les notifications peuvent être limitées.

Ceci peut aider à éviter une déconcentration d'un utilisateur du dispositif lors de la consommation d'un contenu, tout en lui permettant de bénéficier des notifications lorsqu'aucun contenu n'est consommé.

Selon les modes de réalisation, la limitation des notifications peut s'appliquer à toutes les notifications, ou seulement à certaines de notifications.

Par exemple, dans certains modes de réalisation, la limitation peut s'appliquer uniquement aux notifications émises par une certaine ou certaines application(s) (par exemple celles appartenant à une première liste d'applications, configurable par exemple), et/ou à seulement certain(s) type(s) de notification (par exemple, les notifications textuelles, les notifications audio...).

Inversement, dans certains modes de réalisation, la limitation des notifications peut s'appliquer à toutes les notifications, sauf certaine(s) notification(s), comme par exemple les notifications issues d'au moins une application donnée, les messages issus d'au moins un utilisateur donné...

La limitation des notifications peut également varier (par exemple s'appliquer ou non) selon un niveau de priorité des notifications. Les notifications peuvent ainsi être classifiées selon un niveau de priorité, pouvant être défini par exemple par un label (par exemple « prioritaire », « important », « urgent » pour une notification prioritaire, ou « non prioritaire », « priorité faible » pour une notification moins importante) ou un indice de priorité. Dans de tels modes de réalisation, les notifications considérées prioritaires ou urgentes peuvent par exemple ne pas être limitées ou différées.

De tels modes de réalisation peuvent aider à limiter les notifications de manière générale durant la consommation du contenu, tout en bénéficiant en permanence de certaines notifications (considérées par exemple comme particulièrement importantes).

Le type de notifications devant ou ne devant pas être limitées peut être configurée dans certains modes de réalisation, par exemple par un utilisateur du dispositif.

Dans certains modes de réalisation de l'invention, le procédé 200 peut comprendre une détection d'un début de ladite consommation sur une détection d'un accès audit contenu.

Dit autrement, dans de tels modes de réalisation, le début de la consommation du contenu, et donc de la limitation des notifications, est considéré comme survenant lors de la détection d'un accès au contenu. De tels modes de réalisation peuvent aider à détecter au plus tôt le début de la consommation d'un contenu, et à limiter les notifications dès le début de la consommation.

La détection de l'accès au contenu peut s'effectuer de différentes manières. Il peut par exemple s'agir d'une détection d'une ouverture de fichier, du démarrage d'une diffusion de flux réseaux multimédia, ou encore de la détection de la présence d'un contenu physique externe au dispositif par des lunettes telles que les lunettes 100c.

Dans certains modes de réalisation de l'invention, le procédé peut comprendre, suite à une détection d'accès à un contenu, une caractérisation 220 du contenu. La limitation peut par exemple être conditionnée à sa caractérisation. De tels modes de réalisation peuvent par exemple aider à doser la limitation des notifications vers un utilisateur en fonction d'une complexité du contenu consommé, et donc d'un niveau de concentration que nécessite potentiellement ce contenu de la part de l'utilisateur pour une bonne compréhension.

La caractérisation du contenu correspond à l'obtention d'une ou plusieurs caractéristiques du contenu. Des exemples de caractéristiques du contenu peuvent par exemple comprendre :
- un type d'environnement dans lequel le contenu est consommé. Par exemple, s'il s'agit d'un contenu accédé localement sur le dispositif, reçu via un flux multimédia, ou un contenu sur un support physique distinct du dispositif ;
- un type de contenu (texte informatique, mail, podcast, musique, vidéo, journal physique...),
- une complexité du contenu. Par exemple, dans certains modes de réalisation de l'invention, dans le cas d'un texte informatique, le contenu peut être considéré comme simple si le texte est constitué d'une liste de mots simples, par exemple une liste des courses. Le texte peut au contraire être considéré comme complexe s'il s'agit d'un poème ou d'un essai philosophique. La complexité peut être exprimée de différentes manières, par exemple sous la forme d'un indice de complexité, ou de valeur de complexité (par exemple, « simple », « moyennement complexe », « complexe ». La complexité du texte peut être estimée de différentes manières, par exemple en fonction de la longueur des mots, de la diversité du champ lexical utilisé, de la rareté des mots du texte, etc. ;
- une longueur du contenu ;
- etc.

Ces exemples ne sont donnés qu'à titre d'exemple non limitatifs uniquement de caractéristiques des contenus consommables. De manière plus générale, toute caractérisation apte à fournir des caractéristiques relatives à l'expérience d'un utilisateur lors de la consommation d'un contenu peuvent être utilisée dans le cadre de la présente invention. La caractérisation peut concerner une ou plusieurs caractéristiques.

Le conditionnement de la limitation à ladite caractérisation signifie que la limitation dépend des caractéristiques du contenu. Dit autrement, la limitation d'une notification peut n'est effectuée, dans de tels mode de réalisation, que lorsque le contenu présente au moins une première caractéristique, par exemple une première caractéristique parmi des caractéristiques prédéfinies. Par exemple, la limitation peut n'être effectuée :
- que lorsque le contenu appartient à un ou plusieurs types donnés, par exemple, uniquement si le contenu est un texte ou une vidéo ; et/ou
- que si le contenu présente une complexité supérieure ou égale à un premier niveau de complexité (par exemple une valeur seuil prédéfinie). Par exemple, la limitation peut n'être effectuée que pour un contenu complexe (la complexité pouvant par exemple être définie par la rareté ou la diversité du vocabulaire utilisé dans un texte, la langue du texte, la vitesse d'une vidéo...)); et/ou
- que si le contenu présente une durée supérieure ou égale à une première durée (par exemple une durée prédéfinie, la durée du contenu pouvant être définie par exemple par un nombre de mots, de caractères pour un texte, une durée pour une vidéo ou un contenu audio). Par exemple, la limitation d'une notification peut n'être effectuée que pour un contenu considéré comme long .

La limitation peut également n'être effectuée qu'en fonction d'une durée et/ou d'une complexité du contenu. Par exemple, les seuils de complexité à partir desquels la limitation est effectuée peuvent dépendre de la longueur du contenu, la limitation pouvant par exemple être appliquée pour un contenu long et moyennement complexe, mais aussi pour un contenu court de complexité élevée.

Ainsi, dans certains modes de réalisation, le procédé 200 peut comprendre une étape 220 de caractérisation du contenu, et une vérification 221 que les caractéristiques du contenu correspondent à au moins une caractéristique de contenu pour laquelle les notifications doivent être limitées, la limitation à l'étape 230 n'étant activée que dans ce cas. Dans le cas contraire, aucune limitation n'est appliquée, jusqu'à une prochaine étape 210 de détection d'accès d'un contenu.

Selon les modes de réalisation, la caractérisation du contenu peut s'effectuer en une fois, par exemple à l'ouverture du contenu, ou bien plusieurs fois.

Une caractérisation unique du contenu permet par exemple de caractériser lors de son ouverture et pour toute son utilisation un contenu tel qu'un mail, un texte, ou un contenu multimédia court.

Une caractérisation effectuée plusieurs fois permet d'adapter la caractérisation du contenu, et la limitation des notifications, à un contenu dont les caractéristiques sont susceptibles d'évoluer dans le temps. Par exemple, la caractérisation peut s'effectuer en temps réel / à intervalle réguliers sur un fichier audio / vidéo en cours de lecture, ou un flux audio / vidéo, à un dialogue en temps réel, dont les caractéristiques de complexité peuvent varier dans le temps, etc... Ceci permet donc d'adapter la limitation des notifications aux variations des caractéristiques du contenu.

Bien entendu, ces exemples de liens entre les caractéristiques du contenu et la limitation sont fournis à titre d'exemples non limitatifs uniquement, et le conditionnement de la limitation à la caractérisation peut s'appliquer à tout type de caractéristique, ou combinaison de caractéristiques. Par exemple, la limitation peut n'être effectuée que pour un contenu textuel particulièrement complexe et long.

De tels modes de réalisation, peuvent par exemple aider à ne limiter les notifications que pour les contenus nécessitant une attention particulière pour un utilisateur donné.

La figure 3 montre un deuxième exemple du procédé selon certains modes de réalisation.

Le procédé 300 comprend l'étape 230, et, de manière optionnelle, l'étape 210 du procédé 200

Dans certains modes de réalisation de l'invention, ladite limitation peut être mise en oeuvre pendant une durée tenant compte dudit contenu consommé.

A cet effet, dans l'exemple de la figure 3, le procédé 300 peut comprendre une étape 320 d'obtention (par exemple de calcul ou d'estimation) d'une durée de limitation, tenant compte par exemple notamment du contenu, et une mise en oeuvre de l'étape 230 de limitation est pendant la durée de limitation obtenue (sauf fin de la consommation du contenu).

Les notifications peuvent ainsi être limitées pendant la durée estimée. Dans des exemples où la limitation d'une notification comprend un différé de la notification, la notification différée peut être rendue, sous sa forme initiale ou sous une forme altérée, à l'issue de la durée de limitation telle qu'obtenue à l'étape 320.

Dit autrement, dans certains modes de réalisation de l'invention, la prise en compte du contenu consommé peut aider à déterminer (obtenir) une durée de limitation, qui peut par exemple correspondre à une durée estimée de consommation du contenu. Cette durée peut être estimée à partir du contenu lui-même.

Par exemple, la durée peut correspondre à :
- une durée d'un fichier multimédia. par exemple, à l'ouverture d'un fichier multimédia, la durée de consommation du contenu, et donc la durée pendant laquelle les notifications doivent être limitées, peut être estimée comme étant la durée du fichier. La durée du fichier peut par exemple être identifiée dans les métadonnées d'un fichier multimédia, ou évaluée pour un fichier texte en fonction d'un nombre de mots et/ou de caractères ;
- une durée d'une séquence d'un fichier multimédia. Par exemple, dans le cas d'un fichier vidéo, la durée de limitation des notifications peut correspondre à la durée du fichier moins la durée du générique de fin. Le générique de fin peut être détecté si le fichier comprend des chapitres, ou à l'aide d'un détecteur de texte dans la vidéo ;
- une longueur d'un texte. Dans ce cas, on estime une durée de lecture du texte par un utilisateur en fonction de sa longueur. La durée de lecture du texte peut par exemple être déterminée en fonction d'une vitesse estimée de lecture du texte par l'utilisateur, qui peut être une vitesse prédéfinie, ou une vitesse associée à l'utilisateur, par exemple lors d'une phase de calibrage. La vitesse peut également être estimée selon un ou plusieurs paramètres pouvant comprendre une vitesse de base, une richesse sémantique d'un texte (un texte plus complexe étant considéré comme plus long à lire), un état de fatigue, stress ou concentration d'un utilisateur pouvant par exemple être estimé par le biais de mesures de capteurs physiologiques, etc. ;
- une combinaison des exemples ci-dessus.

Ces exemples sont fournis à titre d'exemple non limitatifs uniquement. De manière plus générale, toute durée de consommation associée à un contenu consommée (en particulier une durée estimée directement à partir du contenu lui-même) peut être utilisée dans ce cadre.

De tels modes de réalisation, peuvent par exemple aider à ne limiter les notifications que durant la durée pendant laquelle le fichier sera probablement consommé.

Dans certains modes de réalisation de l'invention, la durée de limitation est au moins fonction de la taille du contenu.

La taille du contenu peut être comprise ici comme une taille d'un contenu devant être parcouru par l'œil de l'utilisateur.

Par exemple, la taille du contenu peut comprendre une ou une combinaison des tailles suivantes :
- la taille d'une image numérique, exprimée par exemple nombre de pixels, surface, largeur, hauteur, etc. ;
- la taille d'un texte, exprimée par exemple en nombre de mots, nombre de caractères, nombre de lignes, police de caractères, etc.
- la taille d'un support papier physique du contenu, exprimée en largeur, hauteur, surface, etc.

Ces exemples sont donnés à titre d'exemples non limitatifs uniquement de la taille d'un contenu, la taille du contenu peut plus généralement correspondre à toute mesure représentant une taille d'un contenu devant être parcouru par l'œil d'un utilisateur du dispositif informatique.

La taille peut également être calculée comme une combinaison de tailles, par exemple lorsqu'un contenu comprend à la fois du texte et des images.

De tels modes de réalisation, peuvent par exemple aider à obtenir une estimation plus précise du temps de consommation du contenu, dans le cas d'un contenu devant être parcouru par l'œil d'un utilisateur, et donc de ne limiter les notifications que lorsque l'utilisateur effectue une consommation active de ce contenu.

La durée de limitation peut par exemple être fonction de la taille en combinaison avec un ou plusieurs autres paramètres, tels qu'une vitesse de lecture par exemple.

Dans certains modes de réalisation de l'invention, lorsque le contenu comprend des données de texte, ladite durée de la limitation peut être au moins fonction d'une longueur des données de texte.

Comme indiqué ci-dessus, la taille des données de texte peut par exemple correspondre à une ou plusieurs tailles choisies parmi un nombre de mots, un nombre de caractères, un nombre de lignes, une police de caractères, etc.

De tels modes de réalisation, peuvent par exemple aider à estimer la durée de consommation d'un fichier texte (ou d'une composante textuelle d'un fichier), et donc à ne limiter les notifications que lorsqu'un utilisateur lit probablement un texte.

Dans certains modes de réalisation de l'invention, la durée de la limitation peut être au moins fonction d'une vitesse de consommation dudit contenu.

La vitesse de consommation du contenu représente la vitesse à laquelle un utilisateur prend connaissance du contenu. Elle peut par exemple être estimée comme :
- un nombre de caractères lus par unité de temps ;
- un nombre de mots lus par unité de temps ;
- une surface d'image parcourue par unité de temps ;
- une combinaison des exemples ci-dessus.

Ces exemples sont donnés à titre d'exemples non limitatifs uniquement. De manière générale, toute vitesse estimée comme une taille de contenu lue par unité de temps peut être utilisée.

La vitesse de consommation du contenu peut être estimée a priori, ou mesurée, par exemple par le biais de méthodes de suivi oculaire (ou oculométrie, ou encore « eye tracking » en anglais). Par exemple, la méthode 300 peut comprendre, préalablement à l'étape 320, une étape 310 d'estimation de la vitesse de lecture du consommateur.

De tels modes de réalisation peuvent par exemple aider à améliorer une estimation du temps de consommation du contenu, et donc à définir la période de limitation du contenu d'une manière plus précise, et ainsi d'adapter la durée de limitation des notifications en fonction des besoins de l'utilisateur.

Dans certains modes de réalisation de l'invention, lorsque le contenu comprend des données de texte, ladite durée de ladite limitation est au moins fonction d'une vitesse estimée de lecture du texte.

Comme indiqué ci-dessus la vitesse estimée de lecture du texte peut être exprimée comme une longueur de texte par une unité de temps.

Ceci peut donc aider à évaluer de manière plus fiable la durée de lecture d'un texte, et donc à aider à limiter les notifications au temps effectif de lecture du texte.

La vitesse de lecture du texte peut être estimée de différentes manières. Par exemple :
- La vitesse peut être prédéfinie :
   ∘ comme une vitesse par défaut ou par configuration;
   ∘ comme une vitesse de lecture d'un utilisateur, estimée pendant une phase de calibration. La phase de calibration peut être effectuée de différentes manières. Par exemple, un utilisateur peut lire un texte de référence en appuyant sur un bouton pour signifier le début et la fin de la lecture. Il peut également lire un texte à voix haute, afin d'estimer la durée de lecture du texte de référence. Dans les deux cas, la vitesse de lecture de l'utilisateur peut être estimée par exemple en divisant la taille du texte de référence par le temps de lecture obtenu ;
- la vitesse peut tenir compte d'une complexité du texte. Elle peut par exemple prendre une première valeur ou une seconde valeur en fonction de la complexité du texte, ou l'utilisateur peut avoir effectué plusieurs phases de calibrations pour différentes complexités ou intervalles de complexité ;
- la vitesse de lecture peut être estimée en temps réel, par exemple en mesurant la vitesse de scrolling de l'utilisateur, ou la vitesse de déplacement oculaire via un dispositif de suivi oculaire.

Selon les modes de réalisation, l'étape 310 d'estimation d'une vitesse de lecture d'un consommateur peut être effectuée pour chaque contenu après détection de l'accès à ce contenu, ou lors d'une phase de calibration préalable à une consommation de contenus (par exemple lors d'une phase d'initialisation du procédé ou lors d'une phase de personnalisation du procédé, pour son adaptation à un profil utilisateur).

Ces exemples sont donnés à titre d'exemple non limitatifs uniquement, et, de manière générale, la vitesse de lecture de l'utilisateur peut être estimée par toute méthode permettant d'obtenir une vitesse de lecture de l'utilisateur par défaut, en fonction du contenu du texte et/ou par des mesures en temps réel.

Ces méthodes peuvent également être combinées. Par exemple, une première vitesse de lecture par défaut peut être obtenue, puis corrigée en temps réel par le biais de mesures.

La figure 4 représente un troisième exemple d'un procédé selon certains de modes de réalisation de l'invention.

Dans certains de modes de réalisation de l'invention, le procédé comprend une détection d'un début de consommation d'un contenu et/ou une surveillance de la consommation via une analyse de mesures issues d'au moins un capteur d'activité d'un consommateur dudit contenu.

Dit autrement, au moins un capteur peut aider à déterminer une activité de l'utilisateur vis-à-vis du contenu. Ceci peut aider à détecter le début de la consommation et/ou à suivre la consommation, c'est-à-dire que :
- lorsque les mesures de l'au moins un capteur indiquent une activité du consommateur vis-à-vis du contenu, le début de la consommation du contenu peut être détecté ;
- une fois que le début de la consommation peut être détecté, la consommation peut être suivie, et la limitation des notifications maintenue, tant que les mesures de l'au moins un capteur indiquent une activité du consommateur vis-à-vis du contenu.

De tels modes de réalisation peuvent par exemple aider à évaluer en temps réel si le consommateur, qui peut notamment être un utilisateur du dispositif informatique, est en train de consommer le contenu, et donc aider à limiter les notifications en temps réel, uniquement lorsque l'utilisateur est en train de consommer le contenu.

Ainsi, la méthode 400 peut comprendre, dans certains modes de réalisation :
- une réception 410 de mesures de l'au moins un capteur d'activité ;
- une détection 420, à partir des mesures, du début de la consommation à partir des mesures de l'au moins un capteur d'activité ;
- si les mesures de l'au moins un capteur d'activité indiquent que la consommation du contenu a débuté, l'étape 230 de limitation de l'au moins une notification ;
- sinon, un retour à l'étape de détection 420.

Ainsi, la limitation de l'au moins une notification n'est enclenchée que lorsque la consommation du contenu a débuté.

La méthode 400 peut également comprendre, en combinaison ou non avec les étapes 410 et 420 :
- une détection 430 « en continu » de la consommation en cours. Ceci consiste à vérifier (par exemple périodiquement), à partir de mesures effectuées à différents instants, reçues en temps réel par l'au moins un capteur d'activité, si la consommation du contenu est en cours ou non ;
- si la consommation du contenu est en cours, le maintien de la limitation de l'au moins une notification à l'étape 230 ;
- sinon, une étape 440 de fin de la limitation de l'au moins une notification, pouvant être suivie d'un retour à l'étape 420 de détection du début de la consommation.

Ainsi, les étapes 430 et 440 permettent de vérifier en continu, une fois la limitation de l'au moins une notification mise en oeuvre, que la consommation du contenu est en cours, et d'arrêter de limiter la notification courante dès que le consommateur a terminé la consommation du contenu.

Si des notifications ont été différées, elles peuvent par exemple être rendues à l'utilisateur à l'étape 440 de fin de limitation.

L'au moins un capteur d'activité du consommateur du contenu peut être n'importe que type de capteur dont les mesures permettent de déterminer si le consommateur est en train de consommer le contenu. Par exemple, il peut s'agir :
- d'un capteur dont les mesures permettent de détecter la présence du consommateur. Par exemple, un tel capteur peut être une caméra permettant le visage de l'utilisateur face à la caméra, un capteur de présence, un capteur de position embarqué dans un dispositif mobile porté par l'utilisateur tel qu'une montre connectée, des lunettes connectées (smartglasses) ou un téléphone de type smartphone, permettant ainsi de détecter que l'utilisateur est à proximité du dispositif informatique, etc.
- d'un capteur permettant de détecter une activité du consommateur sur le dispositif en lien avec le contenu consommé, tel qu'un clavier, une souris, ou un dispositif de suivi oculaire. Dans ce cas, la détection de scrolling, d'action sur le clavier ou d'un déplacement des yeux sur le contenu permet de vérifier que le consommateur est bien en train de consommer le contenu ;
- d'un capteur permettant la détection d'une action de l'utilisateur sur un support physique distinct de l'au moins une interface homme machine sur lequel le contenu est rendu. Par exemple, une caméra embarquée dans des lunettes telles que les lunettes 100c permet de détecter que l'utilisateur des lunettes consomme un contenu sur un support physique distinct des lunettes, par exemple si l'utilisateur écrit sur une feuille, tourne les pages d'un livre ou d'un journal, ou encore scrolle sur un écran tactile dans un lieu public.

Ces exemples ne sont donnés qu'à titre d'exemple uniquement, et de manière plus générale tout capteur dont les mesures permettent de déterminer si le consommateur est en train de consommer le contenu peut être utilisé. Les mesures des capteurs peuvent également être combinées. Par exemple, un suivi oculaire peut n'être enclenché que si un capteur de présence indique que l'utilisateur se situe à proximité du dispositif.

Dans le cas d'un contenu accédé de manière informatique, les mesures de l'au moins un capteur peuvent n'être prises en compte que lorsque l'accès au contenu est détecté. Par exemple, un suivi oculaire, en vue d'une détection d'une consommation d'un fichier ou d'un flux multimédia, peut être mise en oeuvre sur détection d"un accès au fichier ou au flux multimédia .

Comme indiqué ci-avant, dans certains modes de réalisation de l'invention, les mesures issues de l'au moins un capteur d'activité comportent un suivi oculaire du consommateur.

Par exemple, le suivi oculaire peut être effectué sur la base d'images fournies par une webcam, ou sur la base de caméras vidéo intégrés à des lunettes telles que les lunettes 100c.

Le suivi oculaire offre l'avantage de permettre, au moins dans certains modes de réalisation, de détecter un utilisateur du dispositif est en train de consommer un contenu par le suivi du regard de cet utilisateur, que ce contenu soit un texte informatique, un fichier ou flux vidéo, ou encore un contenu rendu sur un support physique distinct de l'interface homme machine, tel qu'un journal, un livre, une feuille blanche ou encore un écran tactile externe.

Le suivi oculaire peut être effectué de différentes manières. Selon les modes de réalisation , toutes les techniques connues de suivi oculaire peuvent être utilisées.

Le suivi oculaire peut être paramétré par défaut pour détecter une activité des yeux de l'utilisateur, ou au contraire peut être adapté à une situation donnée.

Par exemple, dans certains modes de réalisation de l'invention, comprenant une caractérisation du contenu, l'analyse de mesures de suivi oculaire peut être au moins fonction de ladite caractérisation du contenu.

Dit autrement, le type de suivi oculaire et/ou les paramètres de suivi dépendent des caractéristiques du contenu. Par exemple :
- Différentes méthodes de suivi oculaire peuvent être utilisés pour différents types de contenu (par exemple une première méthode de suivi oculaire pour un contenu textuel, et une seconde méthode de suivi oculaire autre pour un contenu vidéo) ;
- Les paramètres de suivi peuvent varier en fonction de la complexité ou du type de contenu. Par exemple, des valeurs de paramètres différents peuvent être appliquées si la vitesse attendue du mouvement de l'œil est faible (texte complexe, vidéo lente), ou au contraire si la vitesse attendue du mouvement de l'œil est plus élevée (liste aérée, vidéo de film d'action...).

Le paramétrage du suivi oculaire en fonction de la caractérisation du contenu peut aider à rendre la détection de la consommation par le consommateur du contenu plus précise, puisque la méthode et/ou les paramètres de détection sont adaptés aux caractéristiques du contenu.

Les méthodes 200, 300, et 400 sont fournies à titre d'exemples non limitatifs uniquement de procédé selon certains modes de réalisation de l'invention.

D'autres modes de réalisation peuvent être envisagés. En particulier, le procédé selon différents modes de réalisation de l'invention peut comprendre une partie uniquement des étapes des méthodes 200, 300 et 400, ou une combinaison de ces étapes.

Par exemple, un procédé selon l'invention peut comprendre à la fois une estimation de la durée de limitation à l'étape 320, et une surveillance de la consommation aux étapes 430 et 440.

Ainsi, dans certains modes de réalisation, les notifications peuvent être limitées pour une durée estimée à partir du contenu, dès que le début de la consommation est détecté, les notifications étant ensuite rendues sans limitation (pour celles encore actives). De même, dans certains modes de réalisation, les notifications peuvent n'être limitées que pendant la durée estimée à partir du contenu, tant que la surveillance indique que le consommateur est en train de consommer le contenu.

Les étapes des méthodes 300 et 400 peuvent également être précédée de l'étape 210 et/ou des étapes 220 et 221. Ainsi, les étapes des méthodes 300 et 400 peuvent n'être enclenchée que lorsque l'accès au contenu est détecté, et si les caractéristiques du contenu requièrent une limitation de l'au moins une notification

Dans certains modes de réalisation de l'invention, au moins une partie du contenu peut être rendu sur un support physique distinct de l'interface homme machine.

Le support physique peut ainsi être un support électronique, par exemple un écran électronique, ou un support non électronique, comme par exemple une feuille de papier.

Selon les modes de réalisation, une consommation de contenu peut aussi bien comprendre en une lecture du contenu, par exemple la lecture d'un journal ou le visionnage d'une vidéo, qu'en une écriture du contenu, par exemple l'écriture manuscrite d'un texte sur une feuille de papier.

La consommation du contenu (par exemple non électronique) peut s'effectuer par la vue, par exemple via des lunettes telles que les lunettes 100c.

Dans certains modes de réalisation de l'invention, la consommation du contenu comporte ainsi au moins un élément parmi une lecture et une écriture d'un contenu sous forme de texte.

Les présentes solutions techniques peuvent trouver à s'appliquer notamment dans le domaine des interfaces hommes machines, dans tout dispositif informatique susceptibles d'émettre des notifications via au moins une interface homme machine.

La présente divulgation ne se limite pas aux exemples de méthode, dispositif, programme d'ordinateur, et support d'enregistrement informatique décrits ci-avant, seulement à titre d'exemple, mais elle englobe toutes les variantes que pourra envisager l'homme de l'art dans le cadre de la protection recherchée.

## Revendications

1. Procédé (200, 300, 400) mis en oeuvre par un dispositif informatique le procédé comprenant :
- une limitation (230) du rendu d'au moins une notification sur au moins une interface homme machine dudit dispositif lors d'une consommation d'un contenu dans un environnement dudit dispositif.

2. Dispositif informatique comprenant au moins un processeur configuré pour mettre en oeuvre une limitation du rendu d'au moins une notification sur au moins une interface homme machine dudit dispositif lors d'une consommation d'un contenu dans un environnement dudit dispositif.

3. Procédé selon la revendication 1, ou dispositif selon la revendication 2, où ladite limitation comprend un différé du rendu de l'au moins une notification.

4. Procédé selon l'une des revendications 1 ou 3, ou dispositif selon l'une des revendications 2 ou 3, où ladite limitation est conditionnée (221) à une caractérisation (220) du contenu.

5. Procédé selon l'une quelconque des revendications 1, 3 ou 4, ou dispositif selon l'une quelconque des revendications 2 à 4, où ladite limitation est mise en oeuvre pendant une durée tenant compte dudit contenu consommé.

6. Procédé ou dispositif selon la revendication 5, où ladite durée de ladite limitation est au moins fonction d'une taille dudit contenu.

7. Procédé ou dispositif selon la revendication 5 ou 6, où ladite durée de ladite limitation est au moins fonction d'une vitesse de consommation dudit contenu.

8. Procédé ou dispositif selon la revendication 6, où, lorsque le contenu comprend des données de texte, ladite durée de ladite limitation est au moins fonction d'une vitesse estimée de lecture du texte.

9. Procédé selon l'une des revendications 1 ou 3 à 8, ou dispositif selon l'une des revendications 2 à 8, où un début de ladite consommation est détecté (420) et/ou où ladite consommation est surveillée (430) via une analyse de mesures issues d'au moins un capteur d'activité d'un consommateur dudit contenu.

10. Procédé ou dispositif selon la revendication 9, où les mesures comportent un suivi oculaire dudit consommateur.

11. Procédé ou dispositif selon la revendication 9, dépendant de la revendication 4, où l'analyse de mesures de suivi oculaire est au moins fonction de ladite caractérisation du contenu.

12. Procédé selon la revendication 1, ou dispositif selon la revendication 2, où le contenu est rendu sur un support physique distinct de l'au moins une interface homme machine.

13. Programme informatique comportant des instructions pour la mise en oeuvre de tout ou partie d'un procédé selon l'une quelconque des revendications 1 ou 3 à 12 lorsque ce programme est exécuté par un processeur.

14. Support d'enregistrement non transitoire, lisible par un ordinateur, sur lequel est enregistré un programme informatique comportant des instructions pour la mise en oeuvre de tout ou partie d'un procédé selon l'une quelconque des revendications 1 ou 3 à 12 lorsque ce programme est exécuté par un processeur.
